# FASCICULE DE BREVET EUROPEEN

(11) **EP 1 815 215 B1**
(45) Date de publication et mention de la délivrance du brevet: **13.06.2012**
(21) Numéro de dépôt: 05819419.2
(22) Date de dépôt: 18.11.2005
(51) Int. Cl.: G01F 23/04

(54) **DISPOSITIF DE GUIDAGE D'UNE JAUGE A HUILE**
VORRICHTUNG ZUR FÜHRUNG EINES ÖLMESSSTABES
DEVICE FOR GUIDING AN OIL DIPSTICK

(30) Priorité: 19.11.2004 FR 0452684
(43) Date de publication de la demande: 08.08.2007
(73) Titulaire: RENAULT S.A.S., 92100 Boulogne Billancourt (FR)
(72) Inventeur: AMIRI, Zakaria, F-75017 PARIS (FR); BISMUTH, Eric, F-75016 PARIS (FR); DAMJANOVIC LE BALEUR, Slavitsa, F-75019 PARIS (FR)
(86) Numéro de dépôt international: PCT/FR2005/050967
(87) Numéro de publication internationale: WO 2006/054030

(56) Documents cités:
- EP-A- 0 355 474
- GB-A- 2 317 931
- US-A- 5 025 569
- PATENT ABSTRACTS OF JAPAN vol. 2002, no. 10, 10 octobre 2002 (2002-10-10) & JP 2002 161724 A (PIOLAX INC), 7 juin 2002 (2002-06-07)

## Description

La présent invention concerne les dispositifs de guidage de jauge à huile, et plus particulièrement les dispositifs de guidage des jauges à huile qui sont rapportés sur un moteur à combustion interne.

Les jauges à huile sont insérées dans le bas moteur pour contrôler le niveau de l'huile de lubrification. Pour monter une jauge, on lui fait traverser un conduit, appelé aussi « tube guide ».

Les documents EP-A-355474 et GB-A-2317931 divulguent des dispositifs de guidage d'une jauge à huile.

Un des objets de l'invention est de pallier aux inconvénients de l'état de la technique.

L'invention fournit dans ce but un dispositif de guidage d'une jauge à huile de moteur à combustion interne, le dispositif comportant un conduit fixé à l'une de ses extrémités au moteur et à l'autre extrémité à un embout d'une goulotte ; selon l'invention, le conduit est un tuyau souple muni d'une attelle de mise en forme rigide.

Selon d'autres caractéristiques de l'invention :
- l'attelle peut être fixée sur le tuyau souple.
- Le dispositif peut comporter des moyens d'indexation en rotation de l'attelle sur la goulotte.
- La goulotte peut être fixé sur le moteur.
- l'attelle, peut comporter des moyens de fixation entourant des portions du tuyau souple.
- les moyens de fixation peuvent se fixer sur le tuyau souple par clipsage.
- l'attelle peut comporter un corps de forme sinueuse dans l'espace.
- le corps peut comporter des nervures de rigidification
- les moyens d'indexation en rotation peuvent être constitués d'une patte fixée à une extrémité de l'attelle et qui définit une rainure, la rainure recevant une forme complémentaire de l'embout de la goulotte.

La présente invention et ses avantages seront mieux compris à la lecture de la description détaillée d'un mode de réalisation pris à titre d'exemple et nullement limitatif, et illustré par les dessins annexés sur lesquels :
- la figure 1 est une vue d'ensemble montrant le dispositif de guidage d'une jauge à huile installé sur un moteur à combustion interne,
- la figure 2 est une vue du tuyau souple et de son attelle,
- la figure 3 est une vue éclatée de la figure 2,
- la figure 4 est une section du dispositif selon la ligne de coupe de la figure 1,

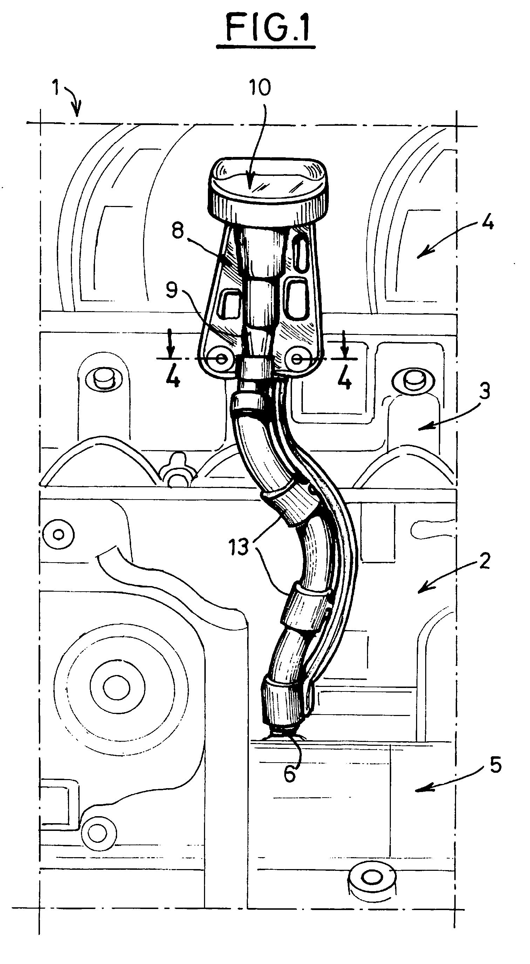

La figure 1 montre une partie d'un moteur 1 à combustion interne. Le moteur 1 comporte un bloc-cylindres 2, une culasse 3 montée sur le bloc-cylindres 2, un répartiteur d'air 4 monté sur la culasse 3, et aussi un carter d'huile 5 lui aussi monté sur le bloc-cylindres 2. Le carter d'huile 5 contient l'huile de lubrification des organes mobiles du moteur 1.

Le bloc-cylindres 2 comporte un embout 6 de fixation du dispositif de guidage de la jauge à huile. Cet embout 6 permet d'accéder à l'huile de lubrification contenue dans le carter d'huile 5.

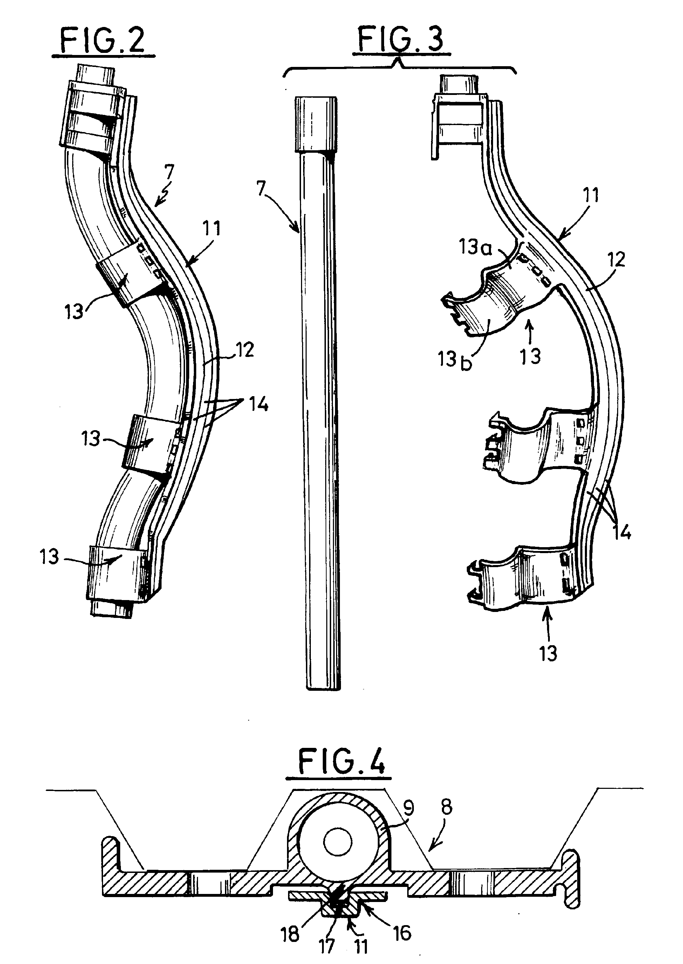

En référence aussi à la figure 2, le dispositif de guidage de la jauge à huile comporte un conduit 7. Le conduit 7 est fixé à l'une de ses extrémités au moteur, et plus exactement à l'embout 6 du bloc-cylindres 2. Le conduit 7 est fixé à l'autre extrémité à un embout 9 d'une goulotte 8. Cette goulotte 8 peut comporte un capuchon 10. La jauge à huile non représentée peut être fixée sur le capuchon 10. Cette goulotte 8 peut servir au remplissage d'huile dans le moteur, en versant de l'huile par cette dernière. La goulotte 8 est fixée sur le moteur 1, ou plus particulièrement sur la culasse. 3, par l'intermédiaire de vis.

Selon l'invention, le conduit 7 est un tuyau souple, du type tuyau souple linéaire. De plus, le tuyau souple 7 est muni d'une attelle 11 rigide assurant sa mise en forme. Ceci permet alors de courber le tuyau souple 7 afin de le positionner dans l'espace qui est disponible dans cette zone, et aussi de garantir une rigidité suffisante pouvant supporter la présence de la jauge à huile, de sorte que le tuyau 7 ne se déforme pas.

En référence aussi à la figure 3, l'attelle 11 est une pièce en matière plastique moulée qui comporte un corps 12 et des moyens de fixation 13 entourant des portions du tuyau souple 7. Le corps 12 est de forme sinueuse dans l'espace. La forme sinueuse permet de définir les courbures du tuyau souple 7 pour l'adapter à l'encombrement disponible à cet endroit. Le corps 12 peut comporter au moins une nervure 14 de rigidification de l'attelle 11.

Dans ce mode de réalisation non limitatif, les moyens de fixation sont constitués de quatre pattes d'accrochage 13 entourant des portions du tuyau souple 7. Elles permettent de fixer l'attelle 11 sur le tuyau souple 7 et aussi de le mettre en forme dans l'espace selon la forme du corps 12. Ces pattes 13 se fixent sur le tuyau 7 par clipsage en s'entourant autour de ce dernier. Elles sont constituées de deux parties demi-circulaires 13a et 13b dont le rayon correspond sensiblement au rayon du tuyau souple 7. La partie 13a est immobile et est fixé sur le corps 12 de l'attelle 11. La partie 13b est fixée sur la partie 13a et est mobile en rotation, de sorte que une fois le tuyau souple 7 mis en place dans la partie 13a, on vient refermer la partie 13b pour entourer complètement le tuyau 7, et on vient la clipser dans la partie 13a. On pourra utiliser une charnière de liaison entre les parties 13a et 13b, par exemple une charnière réalisée pendant le moulage de l'attelle 11 ; en utilisant une épaisseur de charnière très faible, on pourra faire pivoter la partie 13b par rapport à la partie 13a par déformation de cette charnière de faible épaisseur.

On pourra utiliser tout moyen de clipsage connu de l'homme, du métier, tel que des dents disposées sur la partie 13b mobile qui se logent dans des lumières pratiquées dans la partie fixe 13a.

Le dispositif de guidage comporte aussi des moyens d'indexation en rotation de l'attelle 11 sur la goulotte 8, ou plus précisément sur l'embout 9 de la goulotte 8: En référence aussi à la figure 4, ces moyens d'indexation peuvent être constitués d'une patte 16 fixée à une extrémité de l'attelle (11), et plus précisément à une extrémité du corps 12 de l'attelle. Cette patte 16 définit une rainure 17 qui reçoit une forme complémentaire 18 disposée sur l'embout 9 de la goulotte 8 de remplissage d'huile. Ces moyens d'indexation, orientent l'attelle 11 qui donnera la forme du tuyau 7.

L'attelle 11 est donc fixée sur le tuyau 7 et indexée en rotation par la goulotte 8. Il n'y a pas de fixation directe sur le moteur.

## Revendications

1. Dispositif de guidage d'une jauge à huile de moteur (1) à combustion interne, le dispositif comportant un conduit (7) fixé à l'une de ses extrémités au moteur (1) et à l'autre extrémité à un embout (9) d'une goulotte (8) du conduit (7) le conduit (7) étant un tuyau souple muni d'une attelle (11) de mise en forme rigide.

2. Dispositif de guidage d'une jauge à huile selon la revendication 1, **caractérisé en ce que** l'attelle (11) est fixée sur le tuyau souple (7).

3. Dispositif de guidage d'une jauge à huile selon la revendication 1 ou 2, **caractérisé en ce qu'**il comporte des moyens d'indexation en rotation de l'attelle (11) sur la goulotte (8).

4. Dispositif de guidage d'une jauge à huile selon l'une quelconque des revendications 1 à 3, **caractérisé en ce que** la goulotte (8) est fixé sur le moteur (1).

5. Dispositif de guidage d'une jauge à huile selon l'une quelconque des revendications 1, à 4, **caractérisé en ce que** l'attelle (11) comporte des moyens de fixation entourant des portions du tuyau souple (7).

6. Dispositif de guidage d'une jauge à huile selon l'une quelconque des revendications 1 à 5, **caractérisé en ce que** les moyens de fixation se fixent sur le tuyau souple (7) par clipsage.

7. Dispositif de guidage d'une jauge à huile selon l'une quelconque des revendications 1 à 6, **caractérisé en ce que** l'attelle (11) comporte un corps 12 de forme sinueuse dans l'espace.

8. Dispositif de guidage d'une jauge à huile selon l'une quelconque des revendications 1 à 7, **caractérisé en ce que** le corps (12) comporte au moins une nervure (14) de rigidification.

9. Dispositif de guidage d'une jauge à huile selon l'une quelconque des revendications 1 à 8, **caractérisé en ce que** les moyens d'indexation en rotation sont constitués d'une patte (16) fixée à une extrémité de l'attelle (11) et qui définit une rainure (17), la rainure (17) recevant une forme (18) complémentaire de l'embout (9) de la goulotte (8).

## Claims

1. Device for guiding an oil dipstick for an internal combustion engine (1), the device comprising a conduit (7) fixed at one of its ends to the engine (1) and at the other end to an end-piece (9) of a spout (8) of the conduit (7), the conduit (7) being a flexible pipe equipped with a rigid shaping splint (11).

2. Device for guiding an oil dipstick according to Claim 1, **characterized in that** the splint (11) is fixed to the flexible pipe (7).

3. Device for guiding an oil dipstick according to Claim 1 or 2, **characterized in that** it comprises means for indexing the splint (11) in terms of rotation on the spout (8).

4. Device for guiding an oil dipstick according to any one of Claims 1 to 3, **characterized in that** the spout (8) is fixed to the engine (1).

5. Device for guiding an oil dipstick according to any one of Claims 1 to 4, **characterized in that** the splint (11) comprises fixing means surrounding portions of the flexible pipe (7).

6. Device for guiding an oil dipstick according to any one of Claims 1 to 5, **characterized in that** the fixing means are fixed to the flexible pipe (7) by clip-fastening.

7. Device for guiding an oil dipstick according to any one of Claims 1 to 6, **characterized in that** the splint (11) comprises a body (12) of which the shape in free space is sinuous.

8. Device for guiding an oil dipstick according to any one of Claims 1 to 7, **characterized in that** the body (12) comprises at least one stiffening rib (14).

9. Device for guiding an oil dipstick according to any one of Claims 1 to 8, **characterized in that** the rotational-indexing means consist of a tab (16), fixed to one end of the splint (11) and defining a groove (17), the groove (17) accepting a complementary shape (18) belonging to the end-piece (9) of the spout (8).

## Patentansprüche

1. Vorrichtung zum Führen eines Ölmessstabs eines Verbrennungsmotors (1), wobei die Vorrichtung ein Leitungsrohr (7) aufweist, das an einem seiner Enden am Motor (1) und am anderen Ende an einem Anschlussstück (9) eines Stutzens (8) des Leitungsrohrs (7) befestigt ist, wobei das Leitungsrohr (7) ein Schlauch ist, der mit einer steifen Formgebungsschiene (11) versehen ist.

2. Vorrichtung zum Führen eines Ölmessstabs nach Anspruch 1, **dadurch gekennzeichnet, dass** die Schiene (11) am Schlauch (7) befestigt ist.

3. Vorrichtung zum Führen eines Ölmessstabs nach Anspruch 1 oder 2, **dadurch gekennzeichnet, dass** sie Einrichtungen zur Drehindexierung der Schiene (11) auf dem Stutzen (8) aufweist.

4. Vorrichtung zum Führen eines Ölmessstabs nach einem der Ansprüche 1 bis 3, **dadurch gekennzeichnet, dass** der Stutzen (8) am Motor (1) befestigt ist.

5. Vorrichtung zum Führen eines Ölmessstabs nach einem der Ansprüche 1 bis 4, **dadurch gekennzeichnet, dass** die Schiene (11) Befestigungseinrichtungen aufweist, die Teile des Schlauchs (7) umgeben.

6. Vorrichtung zum Führen eines Ölmessstabs nach einem der Ansprüche 1 bis 5, **dadurch gekennzeichnet, dass** die Befestigungseinrichtungen am Schlauch (7) durch Clipbefestigung befestigt werden.

7. Vorrichtung zum Führen eines Ölmessstabs nach einem der Ansprüche 1 bis 6, **dadurch gekennzeichnet, dass** die Schiene (11) einen Körper (12) von im Raum gewundener Form aufweist.

8. Vorrichtung zum Führen eines Ölmessstabs nach einem der Ansprüche 1 bis 7, **dadurch gekennzeichnet, dass** der Körper (12) mindestens eine Versteifungsrippe (14) aufweist.

9. Vorrichtung zum Führen eines Ölmessstabs nach einem der Ansprüche 1 bis 8, **dadurch gekennzeichnet, dass** die Drehindexierungseinrichtungen aus einer Lasche (16) bestehen, die an einem Ende der Schiene (11) befestigt ist und eine Rille (17) definiert, wobei die Rille (17) eine komplementäre Form (18) des Anschlussstücks (9) des Stutzens (8) aufnimmt.
